# EUROPEAN PATENT SPECIFICATION

(11) **EP 3 120 019 B1**
(45) Date of publication and mention of the grant of the patent: **02.05.2018**
(21) Application number: 15714668.9
(22) Date of filing: 02.02.2015
(51) Int. Cl.: F03D 5/00, F03D 5/06

(54) **SYSTEM AND PROCESS FOR MANAGING AND CONTROLLING THE FLIGHT OF WING PROFILES, IN PARTICULAR FOR WIND GENERATOR**
SYSTEM UND VERFAHREN ZUR VERWALTUNG UND STEUERUNG DER FLUCHT VON FLÜGELPROFILEN, INSBESONDERE FÜR WINDKRAFTANLAGE
SYSTÈME ET PROCÉDÉ POUR GÉRER ET COMMANDER LE VOL DE PROFILS D'AILE, EN PARTICULIER POUR UN GÉNÉRATEUR ÉOLIEN

(30) Priority: 18.03.2014 IT TO20140217
(43) Date of publication of application: 25.01.2017
(73) Proprietor: Kite Gen Research S.R.L., 10099 San Mauro Torinese (TO) (IT)
(72) Inventor: IPPOLITO MASSIMO, I-10099 San Mauro Torinese (TO) (IT)
(74) Representative: Garavelli, Paolo
(86) International application number: PCT/IT2015/000018
(87) International publication number: WO 2015/140824

(56) References cited:
- WO-A1-2013/094623
- WO-A2-2009/147692
- WO-A2-2013/005182
- US-B2- 6 523 781

## Description

The present invention refers to a system and to its related process for managing and controlling the flight of at least one wing profile, in particular for wind generator.

The prior art is represented by patent US6523781, which discloses an apparatus to exploit wind energy comprising a wing profile of an inflatable sail, a ground station with at least one pulley adapted to transmit operating power of a shaft for producing energy, a flexible tether adapted to connect such inflatable sail to the pulley to transfer the wing profile lift to such pulley generating operating power, means for controlling the flight trajectory of such wing profile, means for actuating such wing profile and means for rewinding such flexible tether onto the pulley. The inflatable sail is connected to the ground station through control tethers and support tethers. The control tethers can change length for controlling incidence angle, flight direction, and flight speed of such wing profile. The length variation of such control tethers is managed by the ground station through a system of mobile pulleys. Both control tethers and support tethers are wound on a power shaft through a system of pulleys connected to an electric energy generator. The inflatable sail is pushed at a very high speed by the wind speed, causing a rotation of the pulleys. Once having ended the tether unwinding, the inclination angle of the wing profile is modified to be able to start the rewinding of the tethers using a minimum force. Once the tethers have been rewound at the right distance, the wing profile is again inclined for its high-speed operation adapted to generate axial power. Since the tether winding force is much lower with respect to the winding force, a net power is generated. The control group comprises a plurality of mobile supports adapted to separately interact with such control and support tethers for supporting the inflatable sail and regulated the inclination angle of the two ends, through a controller electrically actuated by the ground station.

US6523781 however does not solve the problem of controlling the attitude of a power wing profile avoiding the use of control tethers.

According to ITTO20080423 (WO 2009/147692 A2) filed by the same Applicant, a wind generator is composed of a rotatable basement, an orientable arm, a jet-type ventilation plant, a support system of a variable geometry wing, a system for guiding the tethers. Such flexible and resistant orientable arm assumes an inflexed position given by the tension acting on the tethers depending on the aerodynamic actions acting on the wing in order to reduce the amount of an overturning moment. Such orientable arm can be made of trunks connected by cardan joints while the inflexion is controlled in a programmed way through servomechanisms. Such basement can rotate around a vertical axis while the supporting system is composed of a part of small arms.

ITTO20080423 however does not solve the problem of having to modify the shape of the orientable arm when there are high axial loads along the tethers, using high twisting torques of the servomechanisms to move apart said small arms.

Object of the present invention is solving the above prior art problems by providing a system and its related process for managing and controlling the flight of a wing profile, in particular for wind generator, comprising means for controlling the axial tension of the supporting tethers placed in the ground station and means for controlling the attitude of the wing profile placed on board the inflatable sail.

A further object is using orientable means through servomechanisms for controlling the axial tension of the tethers placed on board an orientable arm connected to a ground station.

A further object is providing a process for managing and controlling the flight of such power wing profile lacking tethers for controlling the attitude.

The above and other objects and advantages of the invention, as will appear from the following description, are obtained with a system and a process as claimed in the respective independent claims. Preferred embodiments and non-trivial variations of the present invention are the subject matter of the dependent claims.

It is intended that the enclosed claims are an integral part of the present description.

It will be immediately obvious that numerous variations and modifications can be made to the described apparatus and method (for example related to shape, sizes, arrangements, various colors and parts with equivalent functionality) without departing from the scope of the invention as appears from the enclosed claims.

The present invention will be better described by some preferred embodiments, provided as a nonlimiting example, with reference to the enclosed drawings, in which:
- Figure 1 shows a perspective view of a wind generator comprising a system for managing and controlling the flight of a wing profile according to the present invention;
- Figure 2 shows a perspective view of a preferred embodiment of an orientable lever of the system according to the present invention comprising means adapted to orient at least one tether in the movement direction of such wing profile;
- Figure 3 shows an enlarged view of Figure 2;
- Figure 4 shows a perspective view of a servomechanism of the system according to the present invention adapted to orient at least one tether in the movement direction of such wing profile;
- Figure 5 shows an enlarged view of the particular contained in circle V in Figure 4;
- Figure 6 shows a perspective view of a device of the system according to the present invention adapted to detect the angular inclination of at least one tether in the movement direction of such wing profile; and
- Figure 7 shows an enlarged part of Figure 6.

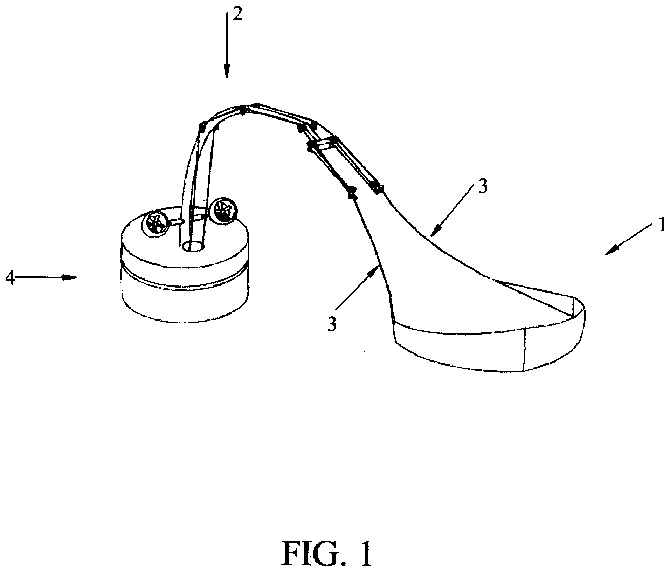

With reference to Figure 1, it is possible to note that a system according to the present invention for managing and controlling the flight of at least one wing profile 1, in particular for wind generator, comprises at least one orientable lever 2 adapted to deviate at least one tether 3 connecting such wing profile 1 to at least one ground station 4.

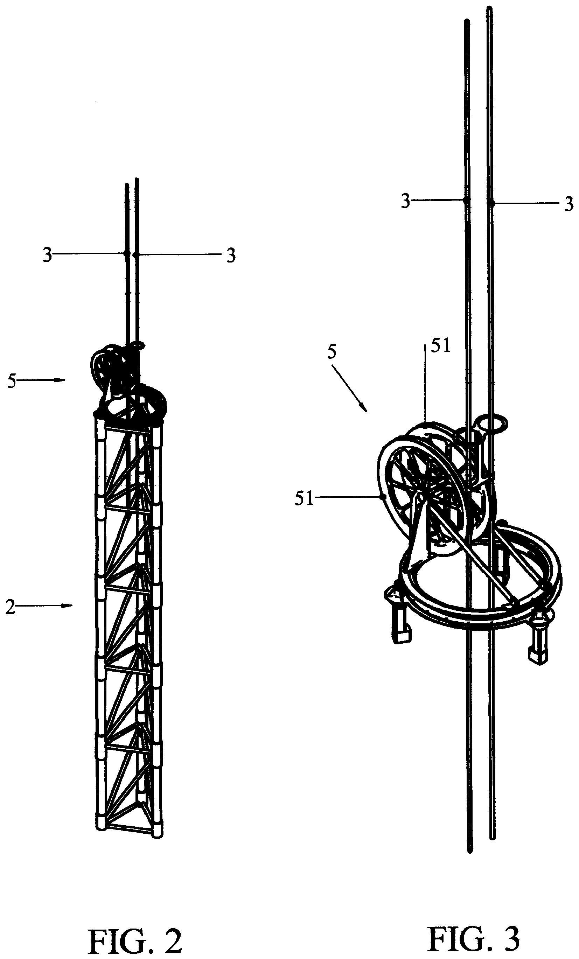

With reference to Figures 2 and 3, it is possible to note that such orientable lever 2 comprises means 5 adapted to orient at least one tether 3 along the movement direction of the wing profile 1. Such means 5 comprise at least one idle pulley 51 adapted to deviate the tether 3 by orienting itself along the movement direction of such wing profile 1.

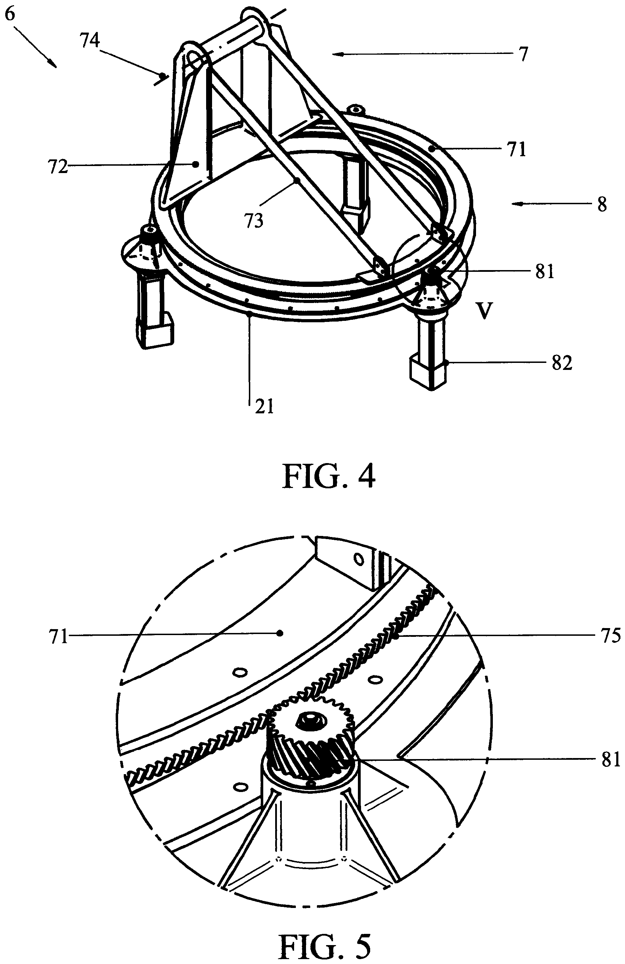

With reference to Figures 4 and 5, it is possible to note that such means 5 comprise at least one servomechanism 6 adapted to orient at least one idle pulley 51 along the movement direction of the wing profile 1.

Such servomechanism 6 comprises a carrier structure 7 adapted to rotate with respect to the orientable lever 2 by means of at least one motored fifth wheel 8.

The carrier structure 7 is composed of a space structure comprising a ring 71 surmounted by a pair of beams 72 opposed by beams 73 with respect to such ring 71. A cylindrical pin supported by such carrier structure 7 allows rotating at least one idle pulley 51 with respect to an axis 74.

The ring 71 is equipped with a toothed wheel 75 integral with a first part of the motored fifth wheel 8.

A second part of the motored fifth wheel 8 is fastened to a frame 21 in turn fastened to the projecting end of the orientable lever 2.

At least one pinion 81 actuated by a motor-reducer 82 belonging to the frame 21 transmits the rotary motion to the ring 71 through the toothed wheel 75 allowing the carrier structure 7 to rotate with respect to the orientable lever 2.

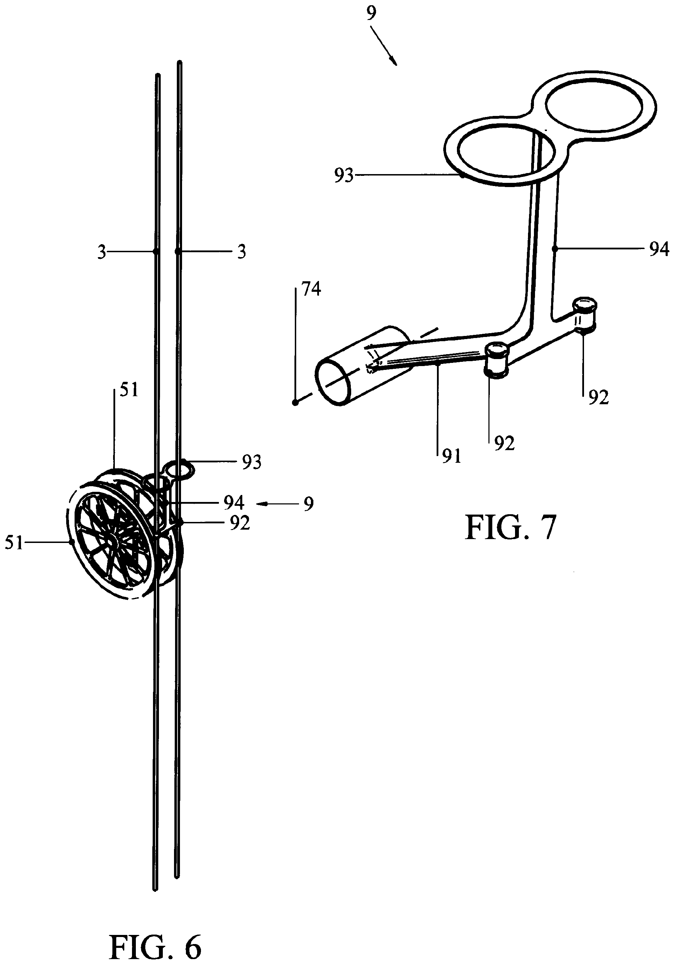

With reference to Figures 6 and 7, it is possible to note that such means 5 further comprise at least one device 9 adapted to detect at least one angular inclination of at least one tether 3 with respect to the orientable lever 2.

The device 9 comprises at least one arm 91 with fulcrum on the axis 74 on which at least one idle pulley 51 rotates. The arm 91 is equipped with at least one cable raceway 92 crossed by such tether 3 allowing such arm 91 to rotate by the same winding angle of at least one tether 3 on at least one idle pulley 51.

Such device 9 further comprises at least one slotted support 93 equipped with means for measuring the transverse displacement of at least one tether 3 with respect to the arm 91.

A system controller (not shown) manages the operation of the motor-reducer 82, processes the values of angular measure detected by the device 9, controls means (not shown) adapted to lift the orientable lever 2.

According to a preferred version, at least one slotted support 93 is integral with the arm 91 through a tangential extension 94.

The optimum winding angle of the tether 3 with respect to the pulley 51 is equal to 20°.

The present invention further deals with a process for managing and controlling the flight of a wing profile 1, implemented through a system for managing and controlling the flight of a wing profile as previously described. In particular, the process according to the present invention comprises the following steps:
a) at least one tether 3 is deviated by the orientable lever 2 by winding on at least one pulley 51;
b) the arm 91 rotates with respect to the axis 74 by the same winding angle of the pulley 51;
c) the angular measure is transmitted to the system controller adapted to drive one or more actuators of the orientable lever 2 in order to take the winding angle to a value preferably equal to 20°;
d) the measure value of the inclination angle of the tether 3 with respect to the arm 91 is processed by the system controller to move the servomechanism 6 adapted to orient the idle pulley 51 along the movement direction of the wing profile 1.

The deviation by winding the tether 3 on the pulley 51 by an angle of 20° allows the current system to dampen the effect of a sudden increase of the axial tension of the tether 3.

Moreover, the system controller can intervene on the inclination of the orientable lever 2 to increase the winding angle up to a value greater than 90°.

## Claims

1. System for managing and controlling the flight of at least one wing profile (1), in particular for wind generator, comprising at least one orientable lever (2) adapted to deviate at least one tether (3) connecting said wing profile (1) to at least one ground station (4), said orientable lever (2) comprising means (5) adapted to orient said tether (3) along a movement direction of said wing profile (1), said means (5) comprising at least one idle pulley (51) adapted to deviate said tether (3) by orienting itself along said movement direction of said wing profile (1), said means (5) comprising at least one servomechanism (6) adapted to orient said idle pulley (51) along said movement direction of said wing profile (1), **characterized in that** said servomechanism (6) comprises a carrier structure (7) adapted to rotate with respect to said orientable lever (2) by means of at least one motored fifth wheel (8).

2. System according to claim 1, **characterized in that** said means (5) comprise at least one device (9) adapted to detect at least one angular inclination of said tether (3) with respect to said orientable lever (2).

3. System according to the previous claim, **characterized in that** said device (9) comprises at least one arm (91) with its fulcrum on a rotation axis (74) of said idle pulley (51) adapted to rotate by the same winding angle of said tether (3) with respect to said idle pulley (51).

4. System according to the previous claim, **characterized in that** said device (9) comprises at least one slotted support (93) equipped with means for measuring a transverse displacement of said tether (3) with respect to said arm (91).

5. System according to any one of claims 3 or 4, **characterized in that** said slotted support (93) is integral with said arm (91).

6. Process for managing and controlling the flight of a wing profile (1) for wind generator, through a system according to any one of claims 3 to 5, **characterized in that** it comprises the following steps:
a) said tether (3) is deviated by said orientable lever (2) by winding onto said pulley (51);
b) said arm (91) rotates with respect to said axis (74) by the same winding angle of said pulley (51);
c) the angular measure is transmitted to at least one system controller adapted to control one or more actuators of said orientable lever (2) in order to take said winding angle to a value preferably equal to 20°;
d) the measure value of the inclination angle of said tether (3) with respect to said arm (91) is processed by said system controller to move said servomechanism (6) adapted to orient said idle pulley (51) along said movement direction of said wing profile (1).

7. Process according to the previous claim, **characterized in that** it comprises a step of damping the effect of a sudden increase of the axial tension of said tether (3) by increasing said winding angle up to a value greater than 90°.

## Patentansprüche

1. Steuer- und Kontrollsystem des Fluges von mindestens einem Flügelprofil (1), insbesondere für Windgeneratoren, das mindestens einen ausrichtbaren Hebel (2) enthält, der dazu dient, mindestens ein Seil (3) umzuleiten, das das genannte Flügelprofil (1) mit mindestens einer Bodenstation (4) verbindet, der genannte ausrichtbare Hebel (2) enthält Mittel (5), die dazu dienen, das genannte Seil (3) gemäß einer Bewegungsrichtung des genannten Flügelprofils (1) auszurichten, die genannten Mittel (5) enthalten mindestens eine Losscheibe (51), die dazu dient, das genannte Seil (3) umzuleiten und sich gemäß der genannten Bewegungsrichtung des genannten Flügelprofils (1) auszurichten, die genannten Mittel (5) enthalten mindestens einen Servomechanismus (6), der dazu dient, die genannte Losscheibe (51) gemäß der genannten Bewegungsrichtung des genannten Flügelprofils (1) auszurichten, und ist **dadurch gekennzeichnet, dass** der genannte Servomechanismus (6) eine Trägerstruktur (7) enthält, die dazu dient, sich gegenüber dem genannten ausrichtbaren Hebel (2) durch mindestens eine angetriebene Scheibe (8) zu drehen.

2. System gemäß Patentanspruch 1, das **dadurch gekennzeichnet ist, dass** die genannten Mittel (5) mindestens eine Vorrichtung (9) enthalten, die dazu dient, mindestens eine Winkelneigung des genannten Seils (3) gegenüber dem ausrichtbaren Hebel (2) zu erfassen.

3. System gemäß dem vorhergehenden Patentanspruch, das **dadurch gekennzeichnet ist, dass** die genannte Vorrichtung (9) mindestens einen drehbaren Arm (91) gegenüber einer Rotationsachse (74) der genannten Losscheibe (51) enthält, die dazu dient, sich um den gleichen Aufwickelwinkel des genannten Seils (3) gegenüber der genannten Losscheibe (51) zu drehen.

4. System gemäß dem vorhergehenden Patentanspruch 1, das **dadurch gekennzeichnet ist, dass** die genannte Vorrichtung (9) mindestens eine Ösenhalterung (93) enthält, die mit Messvorrichtungen einer Querverschiebung des genannten Seils (3) gegenüber dem genannten Arm (91) ausgestattet ist.

5. System gemäß einem der Patentansprüche 3 oder 4, das **dadurch gekennzeichnet ist, dass** die genannte Ösenhalterung (93) einteilig mit dem genannten Arm (91) ist.

6. Steuer- und Kontrollverfahren des Fluges eines Flügelprofils (1) für Windgeneratoren durch ein System gemäß einem der Patentansprüche von 3 bis 5, das **dadurch gekennzeichnet ist, dass** es die folgenden Phasen enthält:
a) Das genannte Seil (3) wird durch den genannten ausrichtbaren Hebel (2) umgeleitet, indem es sich um die genannte Scheibe (51) wickelt;
b) Der genannte Arm (91) dreht sich gegenüber der genannten Achse (74) mit dem gleichen Aufwickelwinkel der genannten Scheibe (51);
c) Das Winkelmaß wird an mindestens ein Kontrollgerät des Systems übertragen, das dazu dient, einen oder mehrere Antriebe des genannten ausrichtbaren Hebels (2) zu steuern, um den genannten Aufwickelwinkel auf einen entsprechenden Wert von vorzugsweise 20° zu führen.
d) Der Maßwert der Winkelneigung des genannten Seils (3) gegenüber dem genannten Arm (91) wird durch das genannte Kontrollgerät des Systems verarbeitet, um den genannten Servomechanismus (6) bewegen zu können, der dazu dient, die genannte Losscheibe (51) gemäß der genannten Bewegungsrichtung des genannten Flügelprofils (1) auszurichten.

7. Verfahren gemäß dem vorhergehenden Patentanspruch, das **dadurch gekennzeichnet ist, dass** es eine Dämpfungsphase der Wirkung einer plötzlichen Erhöhung der Axialspannung des genannten Seils (3) enthält, und den genannten Aufwickelwinkel bis zu einem Wert von über 90° erhöht.

## Revendications

1. Système de gestion et de contrôle du vol au moins d'un cerf-volant éolien (1), en particulier pour un générateur éolien, comprenant au moins un levier orientable (2) apte à dévier au moins un câble (3) reliant le cerf-volant éolien (1) à une station de terre (4) ; le levier orientable (2) comprend des moyens (5) aptes à orienter le câble (3) selon une direction de mouvement du cerf-volant éolien (1) ; ces moyens (5) comprennent au moins une poulie folle (51) apte à dévier le câble (3) en s'orientant selon la direction de mouvement du cerf-volant éolien (1), ces moyens (5) comprennent au moins un servomécanisme (6) apte à orienter la poulie folle (51) selon la direction de mouvement du cerf-volant éolien (1), **caractérisé en ce que** le servomécanisme (6) comprend une structure portante (7) en mesure de tourner par rapport au levier orientable (2) à l'aide d'une couronne motorisée (8).

2. Système, selon la revendication 1, **caractérisé en ce que** les moyens (5) comprennent au moins un dispositif (9) en mesure de relever au moins une inclinaison angulaire du câble (3) par rapport au levier orientable (2).

3. Système, selon la revendication précédente, **caractérisé en ce que** le dispositif (9) comprend au moins un bras (91) fixé à un axe (74) de rotation de la poulie folle (51) apte à tourner avec le même angle d'enroulement que celui du câble (3) par rapport à la poulie folle (51).

4. Système, selon la revendication précédente, **caractérisé en ce que** le dispositif (9) comprend au moins un support percé (93) doté de moyens de mesure d'un déplacement transversal du câble (3) par rapport au bras (91).

5. Système selon l'une des revendications 3 ou 4, **caractérisé en ce que** le support percé (93) est solidaire du bras (91).

6. Procédure de gestion et de contrôle du vol d'un cerf-volant éolien (1) pour générateur éolien à travers un système selon l'une des revendications de 3 à 5, **caractérisé en ce qu'**il comprend les phases suivantes :
a) le câble (3) est dévié par le levier orientable (2) en s'enroulant sur la poulie (51);
b) le bras (91) tourne par rapport à l'axe (74) avec le même angle d'enroulement que celui de la poulie (51) ;
c) la mesure angulaire est transmise au moins à un contrôleur système apte à commander un ou plusieurs actionneurs du levier orientable (2) de sorte à donner à l'angle d'enroulement une valeur égale, de préférence, à 20° ;
d) la valeur de la mesure de l'angle d'inclinaison du câble (3) par rapport au bras (91) est élaborée par le contrôleur système pour pouvoir actionner le servomécanisme (6) apte à orienter la poulie folle (51) selon la direction de mouvement du cerf-volant éolien (1).

7. Procédure selon la revendication précédente, **caractérisé en ce qu'**il comprend une phase d'amortissement de l'effet d'augmentation brusque de la tension axiale du câble (3) en augmentant l'angle d'enroulement jusqu'à une valeur supérieure à 90°.
